# EUROPÄISCHE PATENTSCHRIFT

(11) **EP 0 704 370 B1**
(45) Veröffentlichungstag und Bekanntmachung des Hinweises auf die Patenterteilung: **29.07.1998**
(21) Anmeldenummer: 95115404.6
(22) Anmeldetag: 29.09.1995
(51) Int. Cl.: B62K 17/00, B62J 39/00

(54) **Einrichtung zur Fahrunterstützung eines vorausfahrenden Einzelfahrrads durch ein nachfolgendes Einzelfahrrad**
Apparatus to assist the drive of a first bicycle by a second bicycle following it
Appareil pour assister l'entraînement d'une première bicyclette par une deuxième bicyclette la suivant

(30) Priorität: 01.10.1994 DE 4435310
(43) Veröffentlichungstag der Anmeldung: 03.04.1996
(73) Patentinhaber: Thevis, Paul, 78727 Oberndorf (DE)
(72) Erfinder: Thevis, Paul, 78727 Oberndorf (DE)
(74) Vertreter: Sparing - Röhl - Henseler Patentanwälte

(56) Entgegenhaltungen:
- DE-U- 9 307 485
- FR-A- 352 167
- GB-A- 1 586 727
- US-A- 2 558 880
- US-A- 3 023 027

## Beschreibung

Die Erfindung betrifft eine Einrichtung zur Fahrunterstützung eines vorausfahrenden Einzelfahrrads durch ein nachfolgendes Einzelfahrrad.

Bei der Benutzung eines Tandemfahrrads gleichen sich vor allem die unterschiedlichen Fahrleistungen der Partner bei gemeinsamen Ausfahrten an. Die Länge der Fahrstrecke wird hierdurch optimiert und das Gemeinschaftserlebnis gefördert. Allerdings ist ein Tandemfahrrad sehr lang und schwer, wodurch der Transport mittels Kraftfahrzeug oder Eisenbahn erschwert wird. Es handelt sich hierbei um ein sehr teures Einzweckfahrzeug, bei dem die einzelnen Handhabungen wie Aufsteigen, Absteigen, Trittfrequenz zwischen den Partnern abstimmungsbedürftig sind. Die Sicht des hinteren Fahrers auf die Fahrstrecke ist zudem behindert.

Um die Anschaffungskosten zu reduzieren, ist es bekannt, zwei Einzelfahrräder an ihren Rahmen lösbar miteinander zu verbinden. Nach entsprechendem Auseinanderbau lassen sich die Einzelfahrräder auch als solche benutzen bzw. transportieren. Jedoch erfordert die Montage und Demontage einen erheblichen Aufwand.

Aufgabe der Erfindung ist es, eine Einrichtung zu schaffen, die während des Fahrens je nach Wunsch sowohl ein Einzelradfahren ebenso wie ein gemeinsames, unterstützendes Radfahren und das Wechseln hierzwischen ermöglicht.

Diese Aufgabe wird entsprechend Anspruch 1 gelöst.

Durch Verwendung einer derartigen Einrichtung wird es ermöglicht, daß während des Fahrens ein Wechsel zwischen Einzelradfahren und unterstützendem, tandemähnlichem Radfahren je nach Wunsch stattfinden kann, während die Fahrräder an sich Einzelfahrräder bleiben und als solche wesentlich leichter als ein Tandemfahrrad transportiert werden können. Abstimmungsnotwendigkeiten beim Auf- und Absteigen, bei der Trittfrequenz etc. treten nicht auf. Ein Fahrer kann von hinten an einen anderen Fahrer heranfahren, so daß er mit seinem Fahrrad mit einem am Fahrrad des vorderen Fahrers montierten Anlaufrahmen infolge Federung gedämpft in Eingriff gelangt und so der hintere Fahrer auf das vordere Fahrrad solange schiebend einwirken kann, bis dies nicht mehr gewünscht ist. Durch seitliches Ausschwenken aus der Spur ergibt sich für den nachfolgenden Fahrer eine verbesserte Sicht auf die Fahrstrecke. Beim Windschattenfahren profitiert im Gegensatz zum Solofahren auch der vordere Fahrer durch die erhöhte Schubkraft des Windschattenfahrers.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt schematisiert einen Anlaufrahmen in Seitenansicht.

Fig. 2 zeigt schematisiert den Anlaufrahmen von Fig. 1 in Rückansicht.

Fig. 3 zeigt schematisiert eine Schubvorrichtung in Seitenansicht für einen Anlaufrahmen.

Fig. 4 zeigt eine weitere Einrichtung in Draufsicht.

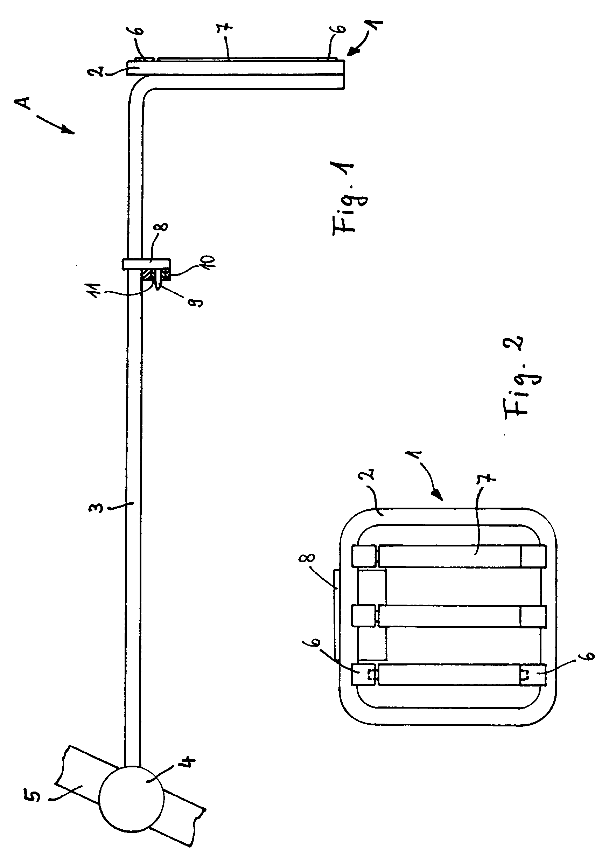

Der in Fig. 1 und 2 dargestellte Anlaufrahmen 1 einer Anlaufvorrichtung A umfaßt ein im wesentlichen rechteckig umlaufendes Rahmenelement 2, das aus einem entsprechend gebogenen Rohr- oder U-Profilabschnitt bestehen kann. An dem Rahmenelement 2 ist an jeder Seite ein Träger 3 befestigt. Die Träger 3 können ebenfalls aus Rohrabschnitten bestehen und zu einem Bügel vereinigt sein. Die Enden der Träger 3 werden von einem Aufnahmelager 4 zum Einstecken und Arretieren der freien Enden der Träger 3 aufgenommen. Das Aufnahmelager 4 ist an einem Rahmenteil 5 eines vorausfahrenden Einzel(damen)fahrrads befestigt. Der Aufbau des Aufnahmelagers 4 kann etwa demjenigen entsprechen, das im DE-GM 93 07 485 für die Befestigung eines Fahrrad-Kindersitzes verwendet wird. Die Träger 3 verlaufen zwischen dem Aufnahmelager 4 und dem Rahmenelement 2 im wesentlichen horizontal.

Das Rahmenelement 2 nimmt über Lager 6 mehrere, vertikal und nebeneinander angeordnete, drehbar gelagerte Rollen 7 als Anlaufelemente auf. Die Lager 6 können mittels nicht dargestellter Schrauben od.dgl. am Rahmenelement 2 befestigt sein. Die Rollen 7 und die Lager 6 bestehen zweckmäßigerweise aus Kunststoff. Ihr Durchmesser ist insbesondere derart bemessen, daß sie gegenüber dem Rahmenelement 2 etwas nach hinten vorstehen.

An den Trägern 3 ist ein Steg 8 angeklemmt, der sich quer zu den Trägern 3 erstreckt und Lagerstifte 9 trägt, die sich in Richtung der Träger 3 sowie nach vorne erstrecken.

Am vorausfahrenden Einzelfahrrad ist beispielsweise am Gepäckträger eine Aufnahmeplatte 10 etwa mittels Rohrschellen montiert. Die Aufnahmeplatte 10 weist Aufnahmebohrungen auf, die mit elastischen Buchsen 11 etwa aus Gummi bestückt sind. Beim Anbringen der Anlaufvorrichtung A werden die Enden der Träger 3 von hinten in das Aufnahmelager 4 eingesteckt und arretiert, wodurch gleichzeitig die Lagerstifte 9 in die Buchsen 11 der Aufnahmebohrungen geschoben werden, so daß der Anlaufrahmen 1 in seiner Stellung gehalten wird.

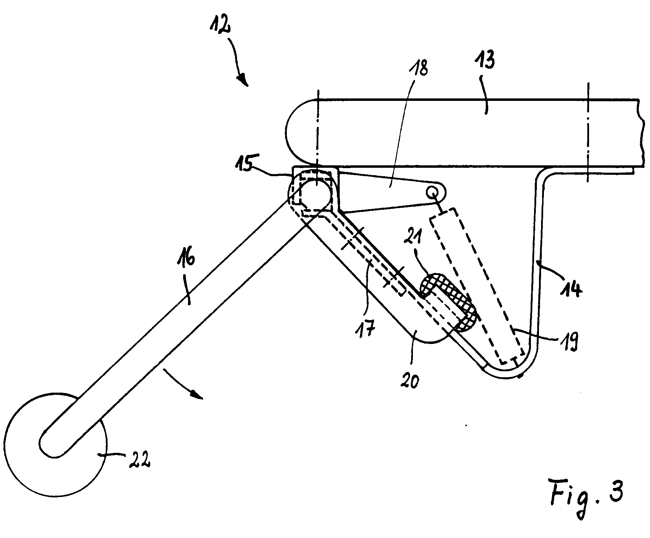

Die in Fig. 3 dargestellte Schubvorrichtung 12 umfaßt einen im wesentlichen horizontal angeordneten Haltebügel 13, dessen Enden von einem nicht dargestellten, am Rahmen eines nachfahrenden Einzel(herren)fahrrads (der in einem viel kleineren Maßstab den Lenkbewegungen und damit den Seitenausschlägen des Vorderrades folgt und daher in bezug auf die Ausrichtung zum vorausfahrenden Fahrrad viel weniger bewegt wird) befestigten Aufnahmelager entsprechend dem Aufnahmelager 4 eingesteckt und arretiert sind. Unter dem beispielsweise aus einem Rohrabschnitt gebildeten Haltebügel 13 ist ein etwa V-förmiger Lagerbügel 14 beispielsweise in Form eines entsprechend ausgeschnittenen und gebogenen Blechteils angeordnet, dessen vorderer Schenkel gegabelt und an den Enden hiervon jeweils zu einer nach unten offenen Lagerschale 15 umgebogen ist. Die beiden Lagerschalen 15 nehmen einen hinteren Querschenkel eines als Treibelement dienenden Treibbügels 16 horizontal gelagert auf, wobei die Lagerschalen 15 jeweils unterseitig durch einen Verriegelungswinkel 17 verschlossen werden, die an dem Lagerbügel 14 angeschraubt werden.

Der Treibbügel 16 ist im Bereich seines von den Lagerschalen 15 aufgenommenen Querschenkels (beim dargestellten Ausführungsbeispiel zwischen den Lagerschalen 15) mit zwei oder mehr Federhebeln 18 versehen, wobei zwischen deren Enden und dem Lagerbügel 14 Zugfedern 19 angeordnet sind, durch die der Treibbügel 16 in eine bezüglich des Haltebügels 13 schräg abwärts und auswärts gerichtete Position vorgespannt wird.

Hierbei wird diese Position durch das Anschlagen von zwei am Treibbügel 16 befestigten Begrenzungslaschen 20 (die beim dargestellten Ausführungsbeispiel außenseitig von den Lagerschalen 15 angeordnet sind) an die Innenseiten der vorderen Schenkel des Lagerbügels 14 festgelegt. Die freien Enden der Begrenzungslaschen 20 sind hierbei entsprechend umgebogen und zweckmäßigerweise an den umgebogenen, mit den Schenkeln des Lagerbügels 14 in Eingriff gelangenden Enden mit Puffern 21 versehen.

Wirkt auf den Treibbügel 16 eine Kraft ein, indem dieser mit dem Anlaufrahmen 1 eines vorausfahrenden Einzelfahrrads in Kontakt gelangt, kann er gegen die Kraft der Zugfedern 19 abwärts bis in eine etwa vertikale Position schwenken, in der die Puffer 21 der Begrenzungslaschen 20 mit dem Haltebügel 13 in Eingriff gelangen.

Der Treibbügel 16 besitzt an seinem vorderen Querschenkel einen Kunststoffmantel 22, der zweckmäßigerweise auf diesen Querschenkel aufgeklemmt ist oder aber auch als Rolle ausgebildet sein kann.

Der Haltebügel 13 und die Träger 3 werden zweckmäßigerweise in einer Höhe etwas oberhalb der Räder der Einzelfahrräder, wo sich normalerweise der Gepäckträger befindet, bzw. am entsprechenden Gepäckträger angebracht, während die damit verbundenen Teile im wesentlichen unterhalb dieser Höhe angeordnet sind.

Da das nachfahrende Fahrrad spurmäßig nicht zum vorausfahrenden ausgerichtet ist, kann der Kunststoffmantel 22 des Treibbügels 16 an dem Anlaufrahmen 1 hin- und hergleiten, was durch die Rollen 7 unterstützt wird. Die seitliche Spurabweichung vom Hinter- zum Vorderfahrer kann etwa der doppelten Breite des Treibbügels 16 entsprechen, da es für den Schub unbedeutend und für beide Fahrer nicht spürbar ist, ob alle Rollen 7 gleichmäßig erfaßt werden, oder ob der seitlich äußerste Abschnitt des Treibbügels 16 nur eine Rolle 7 erfaßt.

Eine Tempodifferenz beim Anfahrvorgang wird von den Zugfedern 19 des Treibbügels 16 aufgefangen, bis schließlich die Puffer 21 an dem Haltebügel 13 anliegen. Entsprechendes gilt für während der unterstützenden Fahrt auftretende Temposchwankungen.

Man kann ständig zwischen unterstützendem und Solofahren je nach Wunsch und Fahr- und Verkehrsituationen frei wählen, da keine feste Kupplung beim Anfahren hergestellt wird.

Gegebenenfalls können auch beide Räder mit Anfahrrahmen 1 und Schubvorrichtung 12 versehen sein, so daß ein Wechsel zwischen vorausund nachfahrendem Fahrrad möglich ist.

Die Aufnahmelager 4 und die Aufnahmeplatte 10 können ständig am Einzelfahrrad verbleiben.

Die Anlaufvorrichtung A und die Schubvorrichtung 12 sind einfach anbringbar und abnehmbar.

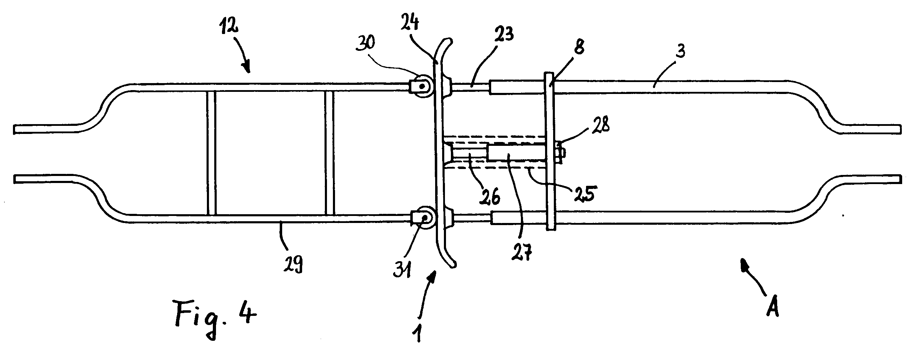

Bei der in Fig. 4 dargestellten Ausführungsform ist wiederum eine Anlaufvorrichtung A und eine Schubvorrichtung 12 für das vorausfahrende bzw. nachfahrende Einzelfahrrad vorgesehen. Die Anlaufvorrichtung A ist an zwei rohrförmigen Trägern 3 angeordnet, die über einen Steg 8 miteinander verbunden sind. Der Steg 8 kann wie bei der vorstehend beschriebenen Ausführungsform mit Lagerstiften 9 zum Einstecken in eine Aufnahmeplatte 10 versehen sein (nicht dargestellt). Die vorderen Enden der Träger 3 werden von einem Aufnahmelager 4 (nicht dargestellt) aufgenommen.

Die hinteren Enden der Träger 3 nehmen jeweils eine Stange 23 der Anlaufvorrichtung A darin verschiebbar auf, wobei die beiden Stangen 23 an einer an beiden Seiten zweckmäßigerweise etwas gerundeten Anlaufplatte 24 befestigt sind (statt der Anlaufplatte 24 kann auch ein Anlaufrahmen 1 entsprechend der ersten Ausführungsform mit Rollen 7 vorgesehen sein). Zwischen dem Steg 8 und der Anlaufplatte 24 ist eine Schraubenfeder 25 angeordnet, die die Anlaufplatte 24 in Richtung von dem Steg 8 weg federvorspannt. An der Anlaufplatte 24 ist eine Stange 26 befestigt, die sich durch eine an dem Steg 8 befestigte und von der Schraubenfeder 25 umgebene Hülse 27 und durch den Steg 8 hindurch erstreckt sowie am freien Ende einen Anschlag 28 etwa in Form einer aufgeschraubten Mutter trägt. Der Anschlag 28 begrenzt das maximale Ausfahren der Anlaufplatte 24 gegenüber den Trägern 3, während die Hülse 27 das maximale Einfahren der Anlaufplatte 24 gegenüber den Trägern 3 begrenzt.

Die Schubvorrichtung 12 umfaßt einen Halterahmen 29, an dem zwei beabstandete Treibrollen 30 um vertikale Achsen 31 drehbar angeordnet sind, die beim unterstützenden Fahren mit der Anlaufplatte 24 in Eingriff stehen.

Wenn anstelle der Anlaufplatte 24 ein Anlaufrahmen 1 mit Rollen 7 verwendet wird, kann die Schubvorrichtung 12 einen vorzugsweise leicht nach vorne gewölbten, horizontal angeordneten Treibbügel tragen, der mit wenigstens einer Rolle 7 in Eingriff gelangt. Der Treibbügel bzw. die Treibrollen 30 können anstelle des Anlaufrahmens 1 bzw. der Anlaufplatte 24 oder auch zusätzlich zu diesen entsprechend zur Anlaufvorrichtung A hin federvorgespannt sein. Der Treibbügel kann horizontal einschiebbar, aber auch wie bei der ersten Ausführungsform verschwenkbar angeordnet sein.

## Patentansprüche

1. Einrichtung zur Fahrunterstützung eines vorausfahrenden Einzelfahrrads durch ein nachfolgendes Einzelfahrrad, umfassend eine an der Heckseite des vorausfahrenden Einzelfahrrads gegenüber diesem nach hinten vorstehend montierbare Anlaufvorrichtung (A) mit wenigstens einem gegenüber dem vorausfahrenden Einzelfahrrad nach hinten vorstehend angeordneten Anlaufelement (7, 24) sowie eine frontseitig zum nachfahrenden Einzelfahrrad an dessen Rahmen montierbaren Schubvorrichtung (12), die mindestens ein gegenüber dem nachfahrenden Einzelfahrrad nach vorne vorstehendes, gegen das Anlaufelement (7, 24) fahrbares und hierdurch an letzterem hin- und hergleitend angreifendes Treibelement (16, 30) aufweist, wobei das Anlauf- und/oder das Treibelement (7, 24; 16, 30) in Richtung auf das jeweilige andere Einzelfahrrad federvorgespannt und seine Bewegung in bezug auf die Anlauf- bzw. Schubvorrichtung (A, 12) durch Anschläge begrenzt ist.

2. Einrichtung nach Anspruch 1, dadurch gekennzeichnet, daß die Anlaufvorrichtung (A) einen Anlaufrahmen (1) umfaßt.

3. Einrichtung nach Anspruch 1 oder 2, dadurch gekennzeichnet, daß das Anlaufelement (7) eine drehbar angeordnete, vorzugsweise vertikal angeordnete Rolle ist.

4. Einrichtung nach Anspruch 1 oder 2, dadurch gekennzeichnet, daß das Anlaufelement (24) eine Anlaufplatte ist.

5. Einrichtung nach einem der Ansprüche 1 bis 4, dadurch gekennzeichnet, daß das Treibelement (16) als Treibbügel ausgebildet ist.

6. Einrichtung nach einem der Ansprüche 1 bis 5, dadurch gekennzeichnet, daß das Treibelement (30) als Treibrolle ausgebildet ist.

7. Einrichtung nach einem der Ansprüche 1 bis 6, dadurch gekennzeichnet, daß das Treibelement (16) in Richtung auf die Anlaufvorrichtung (A) federvorgespannt und seine Bewegung in bezug auf die Anlaufvorrichtung (A) durch Anschläge begrenzt ist.

8. Einrichtung nach einem der Ansprüche 1 bis 7, dadurch gekennzeichnet, daß das Treibelement (16) um eine horizontale Achse zwischen einer Schrägstellung und einer etwa vertikalen Stellung schwenkbar gelagert ist.

9. Einrichtung nach einem der Ansprüche 1 bis 8, dadurch gekennzeichnet, daß der frontseitige, mit dem wenigstens einen Anlaufelement (7, 24) der Anlaufvorrichtung (A) in Eingriff bringbare Abschnitt des Treibelements (16, 30) einen vorzugsweise aufgeklemmten Kunststoffmantel (22) aufweist.

10. Einrichtung nach einem der Ansprüche 1 bis 9, dadurch gekennzeichnet, daß das Treibelement (16) mit diesem verschwenkbare Federhebel (18) trägt, an denen die zum Vorspannen des Treibelements (16) dienenden Federn (19) angreifen.

11. Einrichtung nach einem der Ansprüche 1 bis 10, dadurch gekennzeichnet, daß das Treibelement (16) damit verschwenkbare Begrenzungslaschen (20) aufweist, die zwischen zwei Anschlägen verschwenkbar sind, wobei vorzugsweise die mit den Anschlägen in Eingriff gelangbaren Enden der Begrenzungslaschen (20) Puffer (21) tragen.

12. Einrichtung nach einem der Ansprüche 1 bis 11, dadurch gekennzeichnet, daß das Treibelement (16) in einem Lagerbügel (14) gelagert ist, der an einem Haltebügel (13) befestigt ist, wobei vorzugsweise die Federn (19) am Lagerbügel (14) befestigt sind.

13. Einrichtung nach Anspruch 11 oder 12, dadurch gekennzeichnet, daß der Lagerbügel (14) und der Haltebügel (13) die Anschläge für die Begrenzungslaschen (20) bilden.

14. Einrichtung nach einem der Ansprüche 1 bis 13, dadurch gekennzeichnet, daß die Anlaufvorrichtung (1) an Trägern (3) befestigt ist.

15. Einrichtung nach Anspruch 14, dadurch gekennzeichnet, daß die Träger (3) einen Steg (8) mit Lagerstiften (9) tragen, die in Aufnahmebohrungen einer heckseitig am vorausfahrenden Einzelfahrrad montierbaren Aufnahmeplatte (10) einsteckbar sind, wobei vorzugsweise die Aufnahmebohrungen mit elastischen Buchsen (11) bestückt sind.

16. Einrichtung nach einem der Ansprüche 1 bis 15, dadurch gekennzeichnet, daß am jeweiligen Rahmen der Einzelfahrräder anbringbare Aufnahmelager (4) zum Einstecken und Arretieren von Haltebügeln (13) bzw. Trägern (3) für die Anlaufvorrichtung (A) bzw. die Schubvorrichtung (12) vorgesehen sind.

## Claims

1. Apparatus to assist the drive of a leading individual bicycle by a following individual bicycle, comprising an approach device (A) able to be mounted on the rear side of the leading individual bicycle projecting rearwards with respect to the latter, with at least one approach member (7, 24) arranged to project rearwards with respect to the leading individual bicycle as well as a pushing device (12) able to be mounted on the front side of the following individual bicycle on its frame, which comprises at least one driving member (16, 30) projecting forwards with respect to the following individual bicycle, able to travel towards the approach member (7, 24) and due to this acting on the latter by sliding to and fro, in which case the approach and/or the drive member (7, 24; 16, 30) is spring-loaded in the direction of the respective other individual bicycle and its movement with respect to the approach or pushing direction (A, 12) is restricted by stops.

2. Apparatus according to Claim 1, characterised in that the approach device (A) comprises an approach frame (1).

3. Apparatus according to Claim 1 or 2, characterised in that the approach member (7) is a roller arranged to rotate, preferably arranged vertically.

4. Apparatus according to Claim 1 or 2, characterised in that the approach member (24) is an approach plate.

5. Apparatus according to one of Claims 1 to 4, characterised in that the drive member (16) is constructed as a drive rod.

6. Apparatus according to one of Claims 1 to 5, characterised in that the drive member (30) is constructed as a drive roller.

7. Apparatus according to one of Claims 1 to 6, characterised in that the drive member (16) is spring-loaded in the direction of the approach device (A) and its movement with respect to the approach device (A) is restricted by stops.

8. Apparatus according to one of Claims 1 to 7, characterised in that the drive member (16) is mounted to tilt about a horizontal axis between an inclined position and an approximately vertical position.

9. Apparatus according to one of Claims 1 to 8, characterised in that the section of the drive member (16, 30) on the front side, which can be brought into engagement with at least one approach member (7, 24) of the approach device (A), comprises a synthetic casing (22) which is preferably attached.

10. Apparatus according to one of Claims 1 to 9, characterised in that the drive member (16) supports spring levers (18) able to tilt with the latter, on which act the springs (19) serving for pre-tensioning the drive member (16).

11. Apparatus according to one of Claims 1 to 10, characterised in that the drive member (16) comprises limiting side bars (20) able to tilt therewith, which are tiltable between two stops, in which case preferably the ends of the limiting side bars (20) able to come into engagement with the stops, support buffers (21).

12. Apparatus according to one of Claims 1 to 11, characterised in that the drive member (16) is mounted in a bearing bracket (14), which is attached to a retaining bracket (13), in which case the springs (19) are preferably attached to the bearing bracket (14).

13. Apparatus according to Claim 11 or 12, characterised in that the bearing bracket (14) and the retaining bracket (13) form the stops for the limiting side bars (20).

14. Apparatus according to one of Claims 1 to 13, characterised in that the approach device (1) is attached to supports (3).

15. Apparatus according to Claim 14, characterised in that the supports (3) support a web (8) with bearing pins (9), which can be inserted in receiving bores of a receiving plate (10) able to be mounted on the rear side on the leading individual bicycle, in which case the receiving bores are preferably equipped with resilient bushes (11).

16. Apparatus according to one of Claims 1 to 15, characterised in that receiving bearings (4) able to be located on the respective frame of the individual bicycles are provided for inserting and locking retaining brackets (13) or supports (3) for the approach device (A) or the pushing device (12).

## Revendications

1. Dispositif d'assistance à rouler entre une bicyclette individuelle et une bicyclette individuelle suiveuse, comprenant un dispositif butoir (A) pouvant être monté à l'arrière de la bicyclette de tête, et faisant saillie à l'arrière de celle-ci, muni d'au moins un élément de butée (7, 24) faisant saillie vers l'arrière par rapport à la bicyclette de tête, ainsi qu'un dispositif de poussée (12) pouvant être monté à l'avant sur le cadre de la bicyclette suiveuse, ce dispositif de poussée présentant au moins un élément propulseur (16, 30) faisant saillie à l'avant de la bicyclette suiveuse, mobile en direction de l'élément de butée (7, 24) et attaquant ainsi celui-ci suivant un coulissement de va-et-vient, l'élément de butée et/ou l'élément propulseur (7, 24 ; 16, 30) étant pré-tensionné par un ressort en direction de l'autre bicyclette et son mouvement étant limité par rapport au dispositif butoir ou de poussée (A, 12) par des butées.

2. Dispositif selon la revendication 1, caractérisé en ce que le dispositif butoir (A) comprend un cadre de butée (1).

3. Dispositif selon la revendication 1 ou 2, caractérisé en ce que l'élément de butée (7) est un rouleau fou, de préférence disposé verticalement.

4. Dispositif selon la revendication 1 ou 2, caractérisé en ce que l'élément de butée (24) est une plaque de butée.

5. Dispositif selon l'une des revendications 1 à 4, caractérisé en ce que l'élément propulseur (16) est réalisé sous la forme d'un étrier.

6. Dispositif selon l'une des revendications 1 à 5, caractérisé en ce que l'élément propulseur (30) est réalisé sous la forme d'un rouleau pousseur.

7. Dispositif selon l'une des revendications 1 à 6, caractérisé en ce que l'élément propulseur (16) est placé pré-tensionné par un ressort en direction du dispositif butoir (A), et son mouvement est limité par des butées par rapport audit dispositif butoir (A).

8. Dispositif selon l'une des revendications 1 à 7, caractérisé en ce que l'élément propulseur (16) est monté de manière pivotante autour d'un axe horizontal entre une position oblique et une position sensiblement verticale.

9. Dispositif selon l'une des revendications 1 à 8, caractérisé en ce que la section de l'élément propulseur (16, 30) placé à l'avant, pouvant être amené en prise avec au moins un élément de butée (7, 24) du dispositif butoir (A), présente une enveloppe en matière plastique (22), de préférence fixée par agrafage.

10. Dispositif selon l'une des revendications 1 à 9, caractérisé en ce que l'élément propulseur (16) supporte des leviers à ressort (18) pivotant en même temps que lui, sur lesquels agissent des ressorts (19) servant au prétensionnement de l'élément propulseur (16).

11. Dispositif selon l'une des revendications 1 à 10, caractérisé en ce que l'élément propulseur (16) présente des pattes de limitation pivotantes (20) qui peuvent pivoter entre deux butées, les extrémités de ces pattes (20) pouvant venir en contact avec les butées, étant de préférence munies de patins (21).

12. Dispositif selon la revendication 1 à 11, caractérisé en ce que l'élément propulseur (16) est monté dans un étrier d'appui (14) fixé sur un étrier support (13), les ressorts (19) étant fixés de préférence sur l'étrier d'appui (14).

13. Dispositif selon la revendication 11 ou 12, caractérisé en ce que l'étrier d'appui (14) et l'étrier support (13) constituent les butées pour les pattes de limitation (20).

14. Dispositif selon l'une des revendications 1 à 13, caractérisé en ce que le dispositif de butoir (1) est fixé sur des supports (3).

15. Dispositif selon la revendication 14, caractérisé en ce que les supports (3) supportent une traverse (8) munie de tiges de montage (9) engagées dans des perçages ménagés dans une plaque de réception (10) pouvant être montée à l'arrière de la bicyclette de tête, ces perçages étant de préférence garnis de chevilles élastiques (11).

16. Dispositif selon l'une des revendications 1 à 15, caractérisé en ce que sont prévus, montés sur le cadre respectif des bicyclettes individuelles, des appuis de réception (4) pour l'engagement et le blocage d'étriers supports (13) ou de supports (3) pour le dispositif butoir (A) et le dispositif propulseur (12) respectivement.
